Europäisches Patentamt

European Patent Office

Office européen des brevets

(11) Publication number: **0 488 754 B1**

# EUROPEAN PATENT SPECIFICATION

(45) Date of publication of patent specification: **10.05.95**　(51) Int. Cl.6: **G01F 1/68**, H01C 7/04

(21) Application number: **91311056.5**

(22) Date of filing: **28.11.91**

(54) **Diamond fluid flow sensor.**

(30) Priority: **28.11.90 GB 9025798**

(43) Date of publication of application:
**03.06.92 Bulletin 92/23**

(45) Publication of the grant of the patent:
**10.05.95 Bulletin 95/19**

(84) Designated Contracting States:
**AT BE CH DE FR GB IT LI NL SE**

(56) References cited:
**EP-A- 0 262 601**
**EP-A- 0 387 025**
**EP-A- 0 392 467**
**US-A- 3 435 399**

(73) Proprietor: **DE BEERS INDUSTRIAL DIAMOND
DIVISION (PROPRIETARY) LIMITED
Debid House,
Corner Amethyst Street & Crownwood Road,
Theta
Johannesburg,
Transvaal (ZA)**

(72) Inventor: **Jones, Barbara Lynn
80 Chisbury Close
Forest Park
Bracknell, RG12 3TX (GB)**

(74) Representative: **Nicholls, Michael John et al
J.A. KEMP & CO.
14, South Square
Gray's Inn
London WC1R 5LX (GB)**

Rank Xerox (UK) Business Services
(3.10/3.09/3.3.3)

## Description

### BACKGROUND OF THE INVENTION

This invention relates to a fluid flow sensor.

Gas flow measurements are commonly made with a hot-wire anemometer which comprises a fine wire which is heated to considerably above the ambient gas temperature and which is placed in a gas flow path. Gas flowing past the hot wire cools it, and measurement of the resulting temperature drop allows the gas flow velocity to be measured. A common way of carrying out the measurement is to apply a constant current to the wire, and to measure the variation in the voltage drop across the wire with variations in the gas flow velocity.

In order to provide a suitably sensitive device, the wire is made as thin and light as possible, typically having a length of approximately 5 mm and a diameter of 50 $\mu$m. The wire is thus very fragile and cannot easily be used in harsh environments.

It has been proposed to produce a flow sensor using a polycrystalline diamond film deposited on a silicon substrate by a microwave plasma chemical vapour deposition (CVD) process. In this sensor, the central portion of the silicon substrate is removed, to leave a thin, unsupported diamond bridge. Such a structure is relatively fragile.

US-A-3 435 399 discloses a thermistor which includes a diamond element and which is in accordance with the precharacterising portion of claim 1. WO-A-88/02819 discloses a fluid flow detecting system which includes matched thermistors used to measure flow by one thermistor being placed in thermal contact with the fluid but out of the flow and one in the flow. The change of flow rate results in a change in the rates of dispersion coefficients of the thermistors.

According to the present invention, there is provided a fluid flow sensor having a body comprising a conductive or semi-conductive diamond crystal, and at least two spaced apart electrical contacts on the body to allow an electrical current to be passed through the body to raise its temperature, characterised in that the body is tapered, having a base region and a tip, with the electrical contacts being applied to the base region, and at least a selected portion of the body which is adapted to be exposed to the environment in use comprising a layer of diamond treated to increase its resistance to oxidation.

The electrical contacts may be formed by inserting conductors into respective contact sites in the form of holes drilled into the diamond body.

Alternatively, the contacts may be formed by applying metallic contacts to the body, by brazing, for example.

In another embodiment, the electrical contacts comprise respective portions of a metallic layer applied to the body, the respective portions being separated by a groove cut through the metallic layer.

Preferably, at least a portion of the body is boron doped to increase the resistance of the sensor to oxidation.

The body may be uniformly boron doped during a diamond synthesis process.

Alternatively, at least a portion of the surface of the body may be coated by chemical vapour deposition with a layer of diamond material containing boron, or implanted with boron ions.

The rate of fluid flow may be measured by measuring the variation in the resistance of the sensor for a current supply of constant magnitude, or by measuring the variation in magnitude of current with the resistance and hence temperature of the sensors held constant.

The invention extends to an anemometer including the fluid flow sensor, comprising a constant current source for applying a sufficiently large current to the sensor to heat it to above ambient temperature, and voltage sensing means for measuring the voltage across the sensor as a function of its temperature, so that the measured voltage corresponds to the rate of flow of fluid past the sensor.

In an alternative embodiment, the anemometer circuit comprises a voltage source connectable across the sensor for applying a sufficiently large current to the sensor to heat it to above ambient temperature, an adjustable load connectable in parallel with the sensor, and current sensing means for measuring the relative currents in the sensor and the load, the load being adjustable in use to vary the current in the sensor to maintain it at a constant temperature, so that the relative magnitude of the current in the sensor measured by the current sensing means corresponds to the rate of flow of fluid past the sensor.

The invention will be further described by way of example, with reference to the accompanying drawings, in which:-

Figure 1 is a schematic illustration of a first embodiment of a diamond air flow sensor according to the invention;

Figures 2, 3 and 4 are schematic illustrations of second, third and fourth embodiments of the sensor; and

Figure 5 is a simplified schematic diagram of an electronic anemometer employing the sensor, and

Figure 6 is a schematic diagram of a different electronic anemometer circuit employing the sensor.

## DESCRIPTION OF EMBODIMENTS

The invention relies on the excellent thermal conductivity of diamond crystals to provide a robust air flow sensor which has equivalent or better response characteristics than a much more fragile hot wire sensor. The thermal diffusivity of diamond is approximately 50 times that of platinum, which is commonly used in hot wire sensors. Thus, an equivalent response can be obtained from a diamond sensor having a mass which is 50 times greater than that of an equivalent platinum hot wire sensor. From this it follows that a 50 $\mu$m wire sensor of the kind referred to above can be replaced by, for example, a conical solid diamond sensor having a height of 1 mm and a base 2 mm in diameter. It is not necessary to employ thin, fragile diamond films to obtain acceptable response characteristics.

Such a solid diamond sensor is still physically small but is mechanically more robust than the hot wire sensor and can be mounted, for example, at the end of a probe in an abrasive environment. For example, an air flow sensor of this kind could be mounted on an aircraft wing tip.

The type of diamond used may be a synthetic or natural diamond crystal. The synthetic diamond can be formed by high pressure synthesis, and may be doped with boron, to prevent oxidation at high temperatures. Alternatively, a protective coating of boron-doped diamond may be applied to the diamond by chemical vapour deposition, using diborane gas ($B_2H_6$). Another method of creating a protective layer on the diamond is by implantation of boron ions, to produce a boron implanted layer on at least that portion of the diamond which will be exposed to a harsh environment.

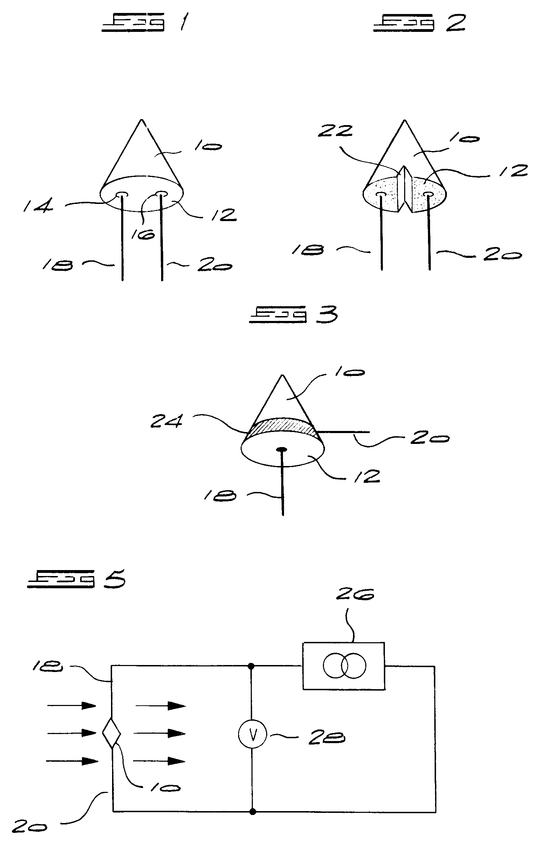

Figures 1 to 4 illustrate four variants of an air flow sensor according to the invention. It should be noted that, although the illustrated sensors have conical or pyramidal bodies, numerous other sensor configurations are possible, and the described embodiments are purely exemplary.

The air flow sensor in Figure 1 has a solid conical body 10 of diamond material. The body has a flat base 12 in which two spaced apart contact sites 14 and 16 are formed by drilling holes in the base. Respective conductors 18 and 20 are inserted tightly into the drilled holes, and can be connected to an electronic anemometer circuit.

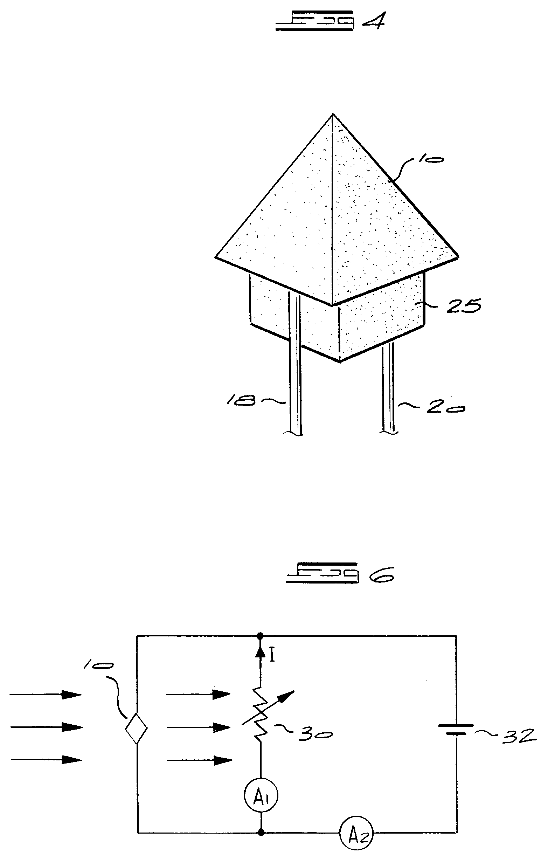

In the embodiment of Figure 2, the base 12 of the body 10 is metallised, for example by gold plating, and a groove 22 is then cut by a laser, dividing the base into two halves and separating the plated portions thereof. The laser-cut groove 22 is cleaned by chemical etching to remove any conductive graphite layer, and conductors 18 and 20 are then brazed on to the respective plated halves of the base.

In Figure 3, a single central contact is applied to the base 12 of the body 10, by either of the methods described above, for example. A metallic ring 24 is then deposited around the lower edge of the cone, and conductors 18 and 20 are, once again, applied to the respective contacts. In this embodiment, the metallic layer 24 may effectively be provided by part of a clamp or mounting assembly which supports the diamond sensor physically as well as providing electrical contacts to it.

In Figure 4, a further embodiment of an air flow sensor is shown in which a recessed square cylindrical tailpiece 25 extends rearwardly from the base of a square pyramidal portion of the diamond body 10. Conductors 18 and 20 are fixed to opposite side faces of the tailpiece 25, so that the "active resistance" of the sensor lies in the tailpiece 25 between the contact points of the conductors 18 and 20. The high thermal diffusivity of diamond facilitates the rapid transfer of heat to this "active resistance" region. In this embodiment, the body could be conical instead of pyramidal, and the recessed tailpiece could be round instead of square cylindrical.

It will be appreciated that the methods of forming contacts described above are exemplary, and any method of making contacts to the diamond body which provides an acceptably linear contact can be used. For example, ion implantation of p-type ions can be used to define relatively highly conductive contact zones on the diamond body, to which metallic conductors are attached.

In order to provide diamond crystals which are highly resistant to oxidation, boron doping of the diamond material is desirable. In prototype sensors according to the invention, boron-doped diamond crystals were synthesised in conventional high pressure/high temperature diamond synthesis apparatus.

Diamond seed crystals of 40/45 mesh were placed on a seed pad in a tantalum reaction capsule. A layer of cobalt and iron catalyst material was placed on the seed pad. On the catalyst layer was placed a layer of carbon source material comprising an admixture of 325 mesh diamond powder, cobalt and iron powder, and a small amount of $Fe_2B$ as a dopant. A further layer of catalyst was placed on the carbon source layer. The capsule was thereafter sealed and subjected to a temperature of 1 450°C and a pressure of 55 kilobars for ten hours. Stones of approximately 0.1 ct were recovered from the reaction capsule and then polished, whereafter they were ready for use. The stones can, of course, be cut to desired shapes using conventional techniques.

The diamonds formed by the above method are uniformly doped with boron, with a boron concentration in the region of 1 000 ppm or greater. Instead of producing uniformly doped stones, the diamond crystal can be coated with a boron-doped layer of diamond material, using a dopant gas containing boron in a CVD process. The preferred gas is diborane ($B_2H_6$). As a further alternative, boron ions can be implanted into the surface of the diamond crystal. In this case, the implantation energy and ion dose are preferably selected to be below the threshold at which the diamond becomes amorphous. It is not necessary that the entire diamond crystal be coated or ion-implanted in the latter two methods. A selected portion of the crystal which will be exposed to a hostile environment in use can be coated or implanted, while the remaining portion of the of crystal is left untreated, except for the attachment of the electrical contacts.

Figure 5 shows, in a highly simplified form, an anemometer circuit employing the fluid flow sensor of the invention. The diamond body 10 is connected, by means of the conductors 18 and 20 attached thereto, to a constant current source 26 which applies a sufficiently large current to the diamond to cause it to be heated to more than 10°C above ambient temperature. A voltmeter 28 measures the voltage drop across the conductors, which is dependent on the electrical resistance of the sensor, which is in turn a function of its temperature. When a flow of air or other gas (indicated by the arrows in Figure 5) passes over the body 10, the body is cooled, so that its temperature and thus its resistance changes. By appropriately calibrating the voltmeter 28, an air or gas velocity reading can be obtained.

In Figure 6, an embodiment of an anemometer circuit is illustrated in which the rate of an air flow is measured by holding the resistance constant and varying the magnitude in current, so as to maintain the temperature of the sensor 10 at a constant level. This constant temperature embodiment is preferred, as it provides a superior noise level and frequency response performance.

In Figure 6, the sensor 10 and a variable resistor 30 are connected in parallel across a voltage source 32. A first ammeter A1 measures the current I passing through the variable resistor 30 and a second ammeter A2 measures the total current passing through both the variable resistor 30 and the sensor 10. The variable resistor 30 is constantly adjusted to vary the current passing through the sensor 10 so as to maintain it at a constant temperature. The ammeter A2 is used as a reference to ensure that the current through the circuit remains constant. For enhanced sensitivity, the currents passing through ammeters A1 and A2 may be fed into a comparator comprising a differential amplifier followed by a proportional amplifier.

The amount of heat given up by the sensor to the flow of fluid is proportional to $I^2R$, and can be represented by the formula:

$$I^2R \; \alpha \; (t_s - t_f)[K_f + (A_s \, S_f \, \rho_f \, v_f)]^{\frac{1}{2}}$$

where:

$s$ = sensor
$f$ = fluid
$t$ = temperature
$A$ = surface area
$S$ = specific heat capacity
$\rho$ = density
$v$ = velocity
and K is a constant

It is clear the the relationship between $\Delta I$ and the gas velocity is not linear.

It will be appreciated that the described sensor can be used in relatively hostile environments, such as on the wing tip of an aircraft, where fragile hot-wire sensors would be unsuitable.

## Claims

1. A fluid flow sensor having a body (10) comprising a conductive or semi-conductive diamond crystal, and at least two spaced apart electrical contacts (18,20) on the body to allow an electrical current to be passed through the body to raise its temperature, characterised in that the body is tapered, having a base region (12) and a tip, with the electrical contacts being applied to the base region, and at least a selected portion of the body which is adapted to be exposed to the environment in use comprising a layer of diamond treated to increase its resistance to oxidation.

2. A fluid flow sensor according to claim 1, characterised in that the electrical contacts (18,20) are applied to contact sites comprising holes (14,16) drilled into the body (10).

3. A fluid flow sensor according to claim 1, characterised in that the electrical contacts comprise metallic conductors (18,20) brazed to the body (10).

4. A fluid flow sensor according to claim 1, characterised in that the electrical contacts are applied to respective contact zones on the body formed by ion implantation.

5. A fluid flow sensor according to claim 1, characterised in that the electrical contacts comprise respective portions of a metallic layer (12) applied to the body (10), the respective portions being separated by a groove (22) cut through the metallic layer.

6. A fluid flow sensor according to any one of claims 1 to 5, characterised in that the body (10) is generally conical in shape, at least one electrical contact (18) being applied to the base (12) of the body.

7. A fluid flow sensor according to claim 6 characterised in that a first electrical contact (18) is applied to the base (12) of the body (10), a second ring-shaped electrical contact (24) being applied to the conical portion of the body adjacent to the base.

8. A fluid flow sensor according to any one of claims 1 to 5 characterised in that the body (10) is pyramidal or conical, with a recessed tailpiece (25) extending from the base of the body to which the electrical contacts are applied.

9. A fluid flow sensor according to any one of claims 1 to 8 characterised in that at least a portion of the body (10) is boron doped to increase the resistance of the sensor to oxidation.

10. A fluid flow sensor according to claim 9 characterised in that the body (10) is uniformly boron doped during a diamond synthesis process.

11. A fluid flow sensor according to claim 9 characterised in that at least a portion of the surface of the body (10) is coated by chemical vapor deposition with a layer of diamond material containing boron.

12. A fluid flow sensor according to claim 9 characterised in that at least a portion of the surface of the body (10) is implanted with boron ions.

13. An anemometer including a fluid flow sensor according to any one of claims 1 to 12 characterised in that it further comprises a constant current source (26) for applying a sufficiently large current to the sensor to heat it to above ambient temperature, and voltage sensing means (28) for measuring the voltage across the sensor as a function of its temperature, so that the measured voltage corresponds to the rate of flow of fluid past the sensor.

14. An anemometer including a fluid flow sensor according to any one of claims 1 to 12 characterised in that it further comprises a voltage source (32) connectable across the sensor for applying a sufficiently large current to the sensor to heat it to above ambient temperature, an adjustable load (30) connectable in parallel with the sensor, and current sensing means (A1, A2) for measuring the relative currents in the sensor and the load, the load being adjustable in use to vary the current in the sensor to maintain it at a constant temperature, so that the relative magnitude of the current in the sensor measured by the current sensing means corresponds to the rate of flow of fluid past the sensor.

**Patentansprüche**

1. Fluiddurchflußsensor mit einem Körper (10) mit einem leitenden oder halbleitenden Diamantkristall und mindestens zwei voneinander beabstandeten elektrischen Kontakten (18,20) an dem Körper, um zu ermöglichen, daß ein durch den Körper zu leitender elektrischer Strom dessen Temperatur erhöht, dadurch gekennzeichnet, daß der Körper konisch zuläuft, wobei er aufweist: einen Basisbereich (12) und eine Spitze, wobei die elektrischen Kontakte an dem Basisbereich angebracht sind, und mindestens einen gewählten Teil des Körpers, der derart ausgebildet ist, daß er bei Verwendung der Umgebung ausgesetzt werden kann, wobei er eine Diamantschicht aufweist, die derart behandelt ist, daß ihr Oxidationswiderstand erhöht ist.

2. Fluiddurchflußsensor nach Anspruch 1, dadurch gekennzeichnet, daß die elektrischen Kontakte (18,20) an Kontaktstellen angebracht sind, welche in den Körper (10) gebohrte Löcher (14,16) aufweisen.

3. Fluiddurchflußsensor nach Anspruch 1, dadurch gekennzeichnet, daß die elektrischen Kontakte metallische Leiter (18,20) aufweisen, die an den Körper (10) hartgelötet sind.

4. Fluiddurchflußsensor nach Anspruch 1, dadurch gekennzeichnet, daß die elektrischen Kontakte an jeweiligen Kontaktzonen an dem Körper angebracht sind, die durch Ionenimplantation gebildet sind.

5. Fluiddurchflußsensor nach Anspruch 1, dadurch gekennzeichnet, daß die elektrischen Kontakte jeweilige Bereiche einer auf den Körper (10) aufgebrachten Metallschicht (12) aufweisen, wobei die jeweiligen Bereiche durch eine durch die Metallschicht geschnittene Rille (22) voneinander getrennt sind.

6. Fluiddurchflußsensor nach einem der Ansprüche 1 bis 5, dadurch gekennzeichnet, daß der Körper (10) im wesentlichen konisch ist, wobei an der Basis (12) des Körpers mindestens ein elektrischer Kontakt (18) angebracht ist.

7. Fluiddurchflußsensor nach Anspruch 6, dadurch gekennzeichnet, daß an der Basis (12) des Körpers (10) ein erster elektrischer Kontakt (18) angebracht ist, wobei an dem an die Basis angrenzenden konischen Teil des Körpers ein zweiter ringförmiger elektrischer Kontakt (24) angebracht ist.

8. Fluiddurchflußsensor nach einem der Ansprüche 1 bis 5, dadurch gekennzeichnet, daß der Körper (10) pyramidal oder konisch ist und ein zurückspringendes Endstück (25) aufweist, das sich von der Basis des Körpers an erstreckt, an der die elektrischen Kontakte angebracht sind.

9. Fluiddurchflußsensor nach einem der Ansprüche 1 bis 8, dadurch gekennzeichnet, daß mindestens ein Teil des Körpers (10) bordotiert ist, um den Widerstand des Sensors gegenüber Oxidation zu erhöhen.

10. Fluiddurchflußsensor nach Anspruch 9, dadurch gekennzeichnet, daß der Körper (10) während eines Diamantsyntheseprozesses gleichmäßig mit Bor dotiert wird.

11. Fluiddurchflußsensor nach Anspruch 9, dadurch gekennzeichnet, daß mindestens ein Teil der Oberfläche des Körpers (10) durch Chemical-Vapour-Deposition mit einer borenthaltenden Diamantmaterialschicht beschichtet ist.

12. Fluiddurchflußsensor nach Anspruch 9, dadurch gekennzeichnet, daß in wenigstens einen Teil der Oberfläche des Körpers (10) Borionen implantiert sind.

13. Anemometer mit einem Fluiddurchflußsensor nach einem der Ansprüche 1 bis 12, dadurch gekennzeichnet, daß es ferner aufweist: eine Konstantstromquelle (26) zum Anlegen eines ausreichend großen Stroms an den Sensor, um diesen über die Umgebungstemperatur zu erwärmen, und eine Spannungsüberwachungseinrichtung (28) zum Messen der Spannung an dem Sensor in Abhängigkeit von seiner Temperatur, so daß die gemessene Spannung der Rate des den Sensor passierenden Fluidstroms entspricht.

14. Anemometer mit einem Fluiddurchflußsensor nach einem der Ansprüche 1 bis 12, dadurch gekennzeichnet, daß es ferner aufweist: eine Spannungsquelle (32), die an den Sensor anschließbar ist, um einen ausreichend großen Strom an den Sensor anzulegen, um diesen über die Umgebungstemperatur zu erwärmen, eine einstellbare Last (30), die mit dem Sensor parallel geschaltet werden kann, und eine Stromüberwachungseinrichtung (A1,A2) zum Messen der relativen Ströme in dem Sensor und der Last, wobei die Last bei Benutzung einstellbar ist, um den Strom in dem Sensor zu variieren, um ihn auf einer konstanten Temperatur zu halten, so daß die von der Stromüberwachungseinrichtung gemessene relative Größe des Stroms in dem Sensor der Rate des den Sensor passierenden Fluidstroms entspricht.

**Revendications**

1. Capteur de débit de fluide ou débitmètre comportant un corps (10) comprenant un cristal de diamant conducteur ou semi-conducteur, et au moins deux contacts électriques espacés entre eux (18, 20) pour permettre le passage d'un courant électrique à travers le corps pour élever sa température, caractérisé en ce que le corps est conique, avec une zone de base (12) et une pointe, avec les contacts électriques appliqués sur la zone de base, et au moins une portion sélectionnée du corps qui est apte à être exposée à l'environnement dans l'utilisation, comprenant une couche de diamant traitée pour améliorer sa résistance à l'oxydation.

2. Débitmètre selon la revendication 1, caractérisé en ce que les contacts électriques (18, 20) sont appliqués sur les sites de contact comprenant des trous (14, 16) percés dans le corps (10).

3. Débitmètre selon la revendication 1, caractérisé en ce que les contacts électriques comprennent des conducteurs métalliques (18, 20) brasés sur le corps (10).

4. Débitmètre selon la revendication 1, caractérisé en ce que les contacts électriques sont appliqués sur les zones de contact respectifs sur le corps formé par l'implantation des ions.

5. Débitmètre selon la revendication 1, caractérisé en ce que les contacts électriques comprennent des portions respectives de couches métalliques (12) appliquées sur le corps (10), les portions respectives étant séparées par une gorge (22) découpée à travers la couche métallique.

6. Débitmètre selon l'une quelconque des revendications 1 à 5, caractérisé en ce que le corps (10) est en général de forme conique, au moins un contact électrique (18) étant appliqué sur la base (12) du corps.

7. Débitmètre selon la revendication 6, caractérisé en ce qu'un premier contact électrique (18) est appliqué sur la base (12) du corps (10), un second contact électrique en forme d'anneau (24) étant appliqué sur la portion conique du corps contigu à la base.

8. Débitmètre selon l'une quelconque des revendications 1 à 5, caractérisé en ce que le corps (10) est pyramidal ou conique avec une portion d'extrémité évidée (25) s'étendant à partir de la base du corps sur laquelle les contacts électriques sont appliqués.

9. Débitmètre selon l'une quelconque des revendications 1 à 8, caractérisé en ce qu'au moins une portion du corps (10) est dopée au bore pour augmenter la résistance du capteur à l'oxydation.

10. Débitmètre selon la revendication 9, caractérisé en ce que le corps (10) est dopé au bore de façon uniforme pendant le procédé de synthèse du diamant.

11. Débitmètre selon la revendication 9, caractérisé en ce qu'au moins une portion de la surface du corps (10) est revêtue par déposition en phase vapeur par procédé chimique d'une couche d'un matériau de diamant contenant du bore.

12. Débitmètre selon la revendication 9, caractérisé en ce qu'au moins une portion de la surface du corps (10) est implantée d'ions de bore.

13. Anémomètre comprenant un débitmètre selon l'une quelconque des revendications 1 à 12, caractérisé en ce qu'il comprend de plus une source de courant constant (26) pour appliquer un courant suffisamment important au capteur pour le chauffer à une température supérieure à la température ambiante, et des moyens de détections de tension (28) pour mesurer la tension à travers le capteur en fonction de sa température de sorte que la tension mesurée correspond au débit de fluide passant devant le capteur.

14. Anémomètre comprenant un débitmètre selon l'une quelconque des revendications 1 à 12, caractérisé en ce qu'il comprend de plus une source de tension (32) pouvant être connectée à travers le capteur pour appliquer un courant suffisamment important au capteur pour le chauffer à une température supérieure à la température ambiante, une charge ajustable (30) pouvant être montée en parallèle avec le capteur, et des moyens de détection de courant (A1, A2) pour mesurer les courants relatifs dans le capteur et la charge, la charge étant ajustable dans l'utilisation pour faire varier le courant dans le capteur et le maintenir à une température constante de sorte que la grandeur relative du courant dans le capteur mesuré par le moyen de détection de courant correspond au débit du fluide passant devant le capteur.

_FIG 1_

_FIG 2_

_FIG 3_

_FIG 5_

$\rule{1.5cm}{0pt}$ Fig 4

$\rule{1.5cm}{0pt}$ Fig 6